# EUROPÄISCHE PATENTSCHRIFT

(11) **EP 0 784 152 B1**
(45) Veröffentlichungstag und Bekanntmachung des Hinweises auf die Patenterteilung: **06.06.2001**
(21) Anmeldenummer: 96119240.8
(22) Anmeldetag: 30.11.1996
(51) Int. Cl.: F02B 67/04, F16D 3/02

(54) **Antrieb für ein Nebenaggregat**
Auxiliary drive
Entraînement des auxiliaires

(30) Priorität: 09.01.1996 DE 19600563
(43) Veröffentlichungstag der Anmeldung: 16.07.1997
(73) Patentinhaber: DaimlerChrysler AG, 70567 Stuttgart (DE)
(72) Erfinder: Eberbach, Hermann, 72622 Nürtingen (DE); Mack, Eberhard, 73274 Notzingen (DE); Döring, Volker, 70329 Stuttgart (DE)

(56) Entgegenhaltungen:
- DE-A- 3 826 326
- DE-A- 4 037 683
- US-A- 2 951 391
- US-A- 4 214 568

## Beschreibung

Die Erfindung betrifft einen Antrieb für ein Nebenaggregat einer Brennkraftmaschine gemäß dem Oberbegriff des Patentanspruchs 1.

Aus der DE 33 26 684 A1 ist eine Brennkraftmaschine mit einer Nockenwelle und einem Nebenaggregat mit einer achsgleich zur Nockenwelle angeordneten Antriebswelle bekannt, bei der die Drehmomentübertragung von der Nockenwelle auf die Antriebswelle des Nebenaggregats mittels eines drehfest auf der Antriebswelle angeordneten und mit der Nockenwelle verspannten Mitnehmers erfolgt.

Diese Anordnung weist den Nachteil auf, daß Schwingungen von der Nockenwelle unmittelbar auf das Nebenaggregat übertragen werden. Dadurch kann es bei empfindlichen Nebenaggregaten zu einem erhöhten Verschleiß kommen.

Weiterhin ist aus der DE 38 26 326 A1 eine Flügelzellenvakuumpumpe bekannt, die durch eine Kupplung mit einer Antriebswelle verbunden ist. Die Kupplung ist eine an der Pumpenwelle drehfest verbundene Scheibe mit einem radialen Schlitz, in den ein an der Antriebswelle exzentrisch sitzender Zapfen eingreift.

Es ist die Aufgabe der Erfindung, einen Antrieb für ein Nebenaggregat einer Brennkraftmaschine zu schaffen, der einfach aufgebaut ist und mit dem die Übertragung von Schwingungen von der Nockenwelle auf das Nebenaggregat reduziert werden kann.

Die Aufgabe wird erfindungsgemäß durch die kennzeichnenden Merkmale des Patentanspruchs 1 gelöst.

Die erfindungsgemäße Mitnahmevorrichtung weist den Vorteil auf, daß sie einfach aufgebaut und somit auch einfach zu montieren ist und daß sie außerdem die Übertragung von Schwingungen von der Nockenwelle auf die Antriebswelle des Nebenaggregats reduziert.

Durch die Anordnung gemäß Anspruch 3 wird außerdem auf einfache Art und Weise für eine Schmierung der Mitnahmeverbindung gesorgt und dadurch der Verschleiß verringert.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1: das Kurbelgehäuse und ein Nebenaggregat einer Brennkraftmaschine teilweise im Schnitt,
- Fig. 2: eine Draufsicht auf die Mitnahmeverbindung gemäß Fig. 1,
- Fig. 3: die Vorrichtung gemäß Fig. 1 mit veränderter Schmiermittelversorgung und
- Fig. 4: eine Draufsicht auf die Mitnahmeverbindung gemäß Fig. 3 zeigt.

In der Zeichnung ist das ausschnittsweise gezeigte Kurbelgehäuse einer Brennkraftmaschine mit 1 bezeichnet. Die Brennkraftmaschine weist eine teilweise dargestellte Nockenwelle 2 mit einem Nocken 3 auf, die an ihrem Ende in einer Lagerbohrung 4 im Kurbelgehäuse 1 gleitgelagert ist. Zur Versorgung der Lagerstelle 5 mit Schmiermittel ist im Kurbelgehäuse 1 eine Schmiermittelbohrung 6 vorgesehen.

Ein insgesamt mit 7 bezeichnetes Nebenaggregat, das eine achsgleich zur Nockenwelle 3 angeordnete Antriebswelle 8 aufweist, ist beispielsweise über eine Flanschverbindung am Kurbelgehäuse 1 befestigt. Die Antriebswelle 8 wird über eine Mitnahmeverbindung 9 durch die Nockenwelle 2 angetrieben. Die Mitnahmeverbindung 9 besteht aus einem drehfest mit der Antriebswelle 9 verbunden Mitnehmer 10 und einem außerhalb der Drehachse an der Stirnseite 11 der Nockenwelle 2 angeordneten Bolzen 12. Der Mitnehmer 10 besteht aus einem scheibenförmigen Grundkörper 16 und einem sich nach außen erstreckenden Finger 17. Der Übergang vom Grundkörper 16 zum Finger 17 ist derart ausgebildet, daß sich eine Mulde 18 ausbildet, in der der Bolzen 12 bei einer Drehbewegung der Nockenwelle 2 am Mitnehmer 10 anliegt.

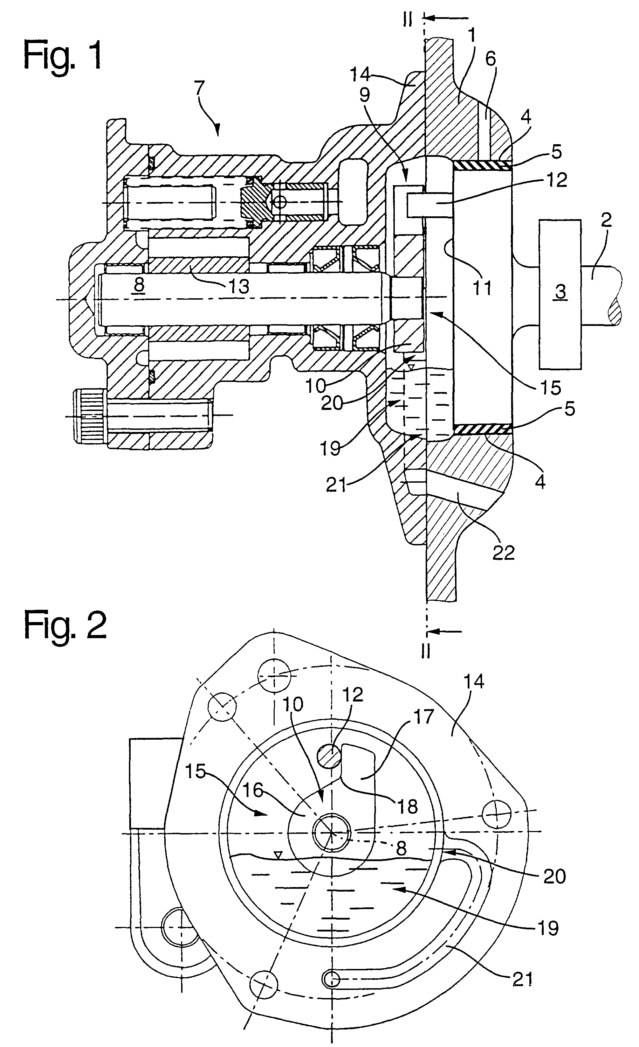

Die Funktion beziehungsweise der genaue Aufbau des Nebenaggregats ist nicht Gegenstand der Erfindung und wird daher auch nur kurz beschrieben. Das in Fig. 1 dargestellte Ausführungsbeispiel zeigt eine Kraftstoffpumpe, deren Antriebswelle 8 drehzahlsynchron zur Nockenwelle 2 der Brennkraftmaschine mit Hilfe der Mitnahmeverbindung 9 angetrieben wird. Am gegenüberliegenden Ende der Antriebswelle 8 ist der eigentliche Pumpenkörper 13 drehfest mit der Antriebswelle 8 verbunden, so daß die Kraftstoffpumpe mit der Nockenwellendrehzahl angetrieben wird.

Im Bereich der Mitnahmeverbindung 9 sind im Kurbelgehäuse 1 und im Gehäuse 14 des Nebenaggregats 7 einen Vorratsraum 15 bildende Ausnehmungen vorgesehen. Der Vorratsraum 15 muß hierbei zumindest zu groß ausgebildet werden, daß die Drehbewegung des Bolzens 12 und des Mitnehmers 10 nicht beeinträchtigt wird. Der Vorratsraum 15 dient außerdem zur Aufnahme von Leckschmiermittel, das auf der Stirnseite 11 der Nockenwelle 2 aus der Lagerstelle 5 austritt. Um zu verhindern, daß das Schmiermittel unkontrolliert aus dem Vorratsraum 15 austritt, ist das Gehäuse 14 des Nebenaggregats 8 gegen das Kurbelgehäuse 1 und gegen die Antriebsachse 8 abgedichtet. Das Leckschmiermittel sammelt sich in einem Sumpf 19 im unteren Bereich des Vorratsraumes 15. Bei jeder Umdrehung der Nockenwelle 2 panschen somit der Bolzen 12 und der Mitnehmer 10 durch den Sumpf 19, so daß die Mitnahmeverbindung 9 im Bereich der Mulde 18 stets eine ausreichende Schmierung erfährt. Die Schmierung ist notwendig, um einen Verschleiß am Bolzen 12 beziehungsweise am Mitnehmer 10 im Bereich der Mulde 18 aufgrund einer Relativbewegung dieser Teile 12, 10, die durch Schwingungen der Nockenwelle 2 entstehen, zu vermeiden.

Um zu verhindern, daß sich der gesamte Vorratsraum 15 mit Leckschmiermittel füllt, kann, wie in den Fig. 1 und 2 dargestellt, im Gehäuse 14 des Nebenaggregats 7 ein Überlauf 20 vorgesehen werden. Der Überlauf besteht aus einem Kanal 21, der seitlich vom Vorratsraum 15 abzweigt und von dort in den unteren Teil des Gehäuses 14 verläuft, und einer Bohrung 22, die den Kanal 21 mit dem Kurbelgehäuse 1 verbindet. Durch die Wahl der Höhe, in der der Kanal 21 vom Umfang des Vorratsraumes 15 abzweigt, kann die Ausdehnung des Sumpfes 19 bestimmt werden. Vorzugsweise wird der Überlauf 20 so angeordnet, daß eine ausreichende Schmierung der Mitnahmeverbindung 9 gerade noch gewährleistet wird. Eine unnötig große Schmiermittelmenge im Vorratsraum 15 würde hingegen zu unerwünschten Reibungsverlusten aufgrund der erhöhten Panscharbeit führen.

Neben der im Ausführungsbeispiel gezeigten Anordnung des Überlaufs 20 im Gehäuse 14 ist es natürlich auch möglich, sowohl den Kanal 21 als auch die Bohrung 22 im Kurbelgehäuse 1 anzuordnen. Außerdem ist es abweichend von der gezeigten Anordnung auch möglich, den Vorratsraum 15 durch Ausnehmungen ausschließlich im Kurbelgehäuse 1 oder im Gehäuse 14 des Nebenaggregats 7 auszubilden. Der Verlauf des Kanals 21 und der Bohrung 22 wird vorzugsweise so gewählt, daß das überschüssige Schmiermittel aus dem Vorratsraum 15 allein durch die Schwerkraft zurück ins Kurbelgehäuse 1 geführt wird.

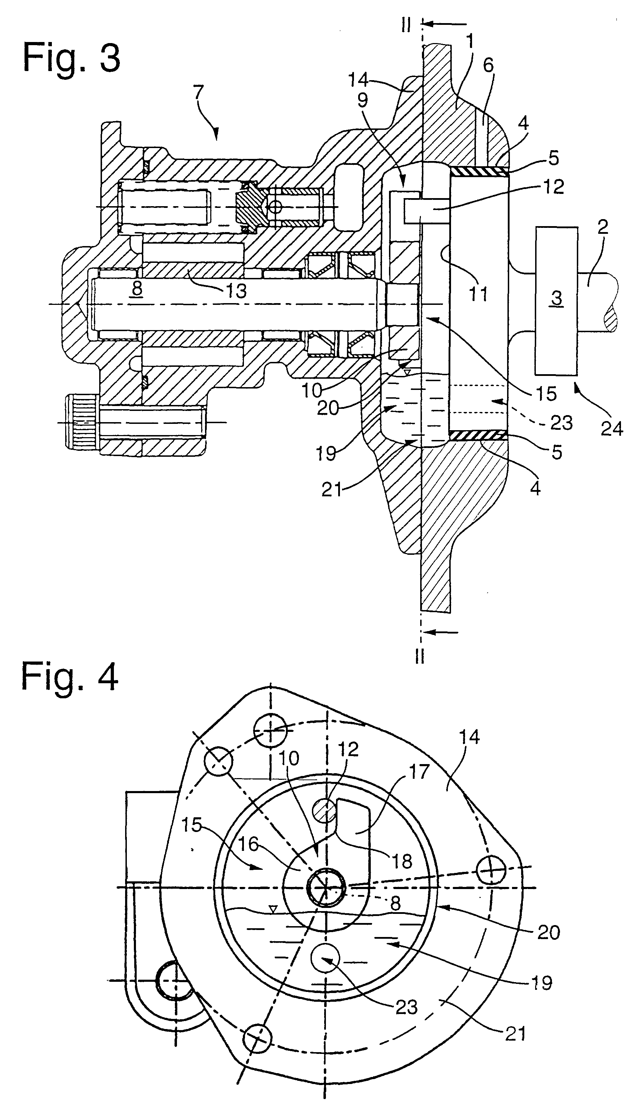

Ein zusätzliches Ausführungsbeispiel für die Schmierung der Mitnahmeverbindung 9 zeigen die Fig. 3 und 4, wobei gleiche Teile gegenüber den Fig. 1 und 2 mit gleichen Bezugsziffern gekennzeichnet sind. Abweichend vom ersten gezeigten Ausführungsbeispiel entfallen bei dieser Anordnung der Überlauf 20, der Kanal 21 und die Bohrung 22. Im Gegensatzzum ersten Ausführungsbeispiel ist hier der Vorratsraum 15 mit dem nicht näher gezeigten Kurbelraum 24 der Brennkraftmaschine über eine in der Stirnseite der Nockenwelle 2 vorgesehene Durchgangsbohrung 23 verbunden. Vorzugsweise ist die Durchgangsbohrung 23 in Bezug auf die Nockenwellenachse gegenüber dem Bolzen 12 um 180° versetzt angeordnet.

Die Durchgangsbohrung 23 dient gleichzeitig als Ölzulauf und als Ölablauf. Bei Stillstand der Brennkraftmaschine läuft das Öl bis zur Unterkante der Durchgangsbohrung 23 aus dem Vorratsraum 15 in den Kurbelraum 24 ab. Daher ist der Ölstand im Vorratsraum 15 nach Stillstand der Brennkraftmaschine von der Stellung der Durchgangsbohrung 23 und somit von der Stellung der Nockenwelle 2 abhängig. Im Betrieb der Brennkraftmaschine kann Öl über die Schmiermittelbohrung 6 und/oder die Durchgangsbohrung 23 in den Vorratsraum 15 gelangen. Über die Durchgangsbohrung 23 kann gleichzeitig jedoch auch Öl aus dem Vorratsraum 15 in den Kurbelraum 24 der Brennkraftmaschine zurückfließen. Daher stellt sich im Betrieb ein Gleichgewicht ein zwischen Ölabfluß und Ölzufluß ein, wobei der Schmiermittelfüllstand ein solches Niveau erreicht, daß die Durchgangsbohrung 23 in der untersten, in Fig. 4 dargestellten Stellung vollständig in den Schmiermittelsumpf 19 eintaucht. Die Anordnung einer solchen Durchgangsbohrung 23 weist den Vorteil auf, daß sich der Vorratsraum 15 beim Start der Brennkraftmaschine im Verglich zum ersten Ausführungsbeispiel schneller mit Öl füllt.

Die Erfindung erstreckt sich nicht nur auf eine Mitnahmeverbindung zwischen der Antriebswelle 8 des Nebenaggregats 7 und der Nockenwelle 2 der Brennkraftmaschine, sondern auch auf Mitnahmeverbindungen zur Kurbelwelle oder einem anderen von der Brennkraftmaschine angetriebenen Bauteil.

Die Speicherung des Leckschmiermittels einer Gleitlagerstelle in einem Vorratsraum zur Verwendung als Schmierbad und die Anordnung eines Überlaufs zur Rückführung der überschüssigen Leckschmiermittelmenge in den ursprünglichen Schmiermittelkreislauf kann nicht nur für die gezeigte Mitnahmeverbindung eingesetzt werden, sondern kann an beliebigen Gleitlagerstellen und zur Schmierung beliebiger Reibungsstellen vorgesehen werden.

## Patentansprüche

1. Antrieb für ein Nebenaggregat einer Brennkraftmaschine, wobei eine Antriebswelle des Nebenaggregats achsgleich zu einer von der Brennkraftmaschine angetriebenen Welle angeordnet ist, wobei die Antriebswelle durch eine zwischen der Welle und der Antriebswelle angeordneten Mitnahmeverbindung angetrieben wird,
wobei die Mitnahmeverbindung durch einen an der Stirnseite der Welle außerhalb der Drehachse angeordneten Bolzen, der in einen drehfest auf der Antriebswelle angeordneten Mitnehmer eingreift, ausgebildet ist,
**dadurch gekennzeichnet,**
daß die Welle (2) in einem Gleitlager (5) gelagert ist, daß der Lagerstelle (5) ein Schmiermittel zugeführt wird, und daß das aus der Lagerstelle (5) austretende Leckschmiermittel in einem Vorratsraum (15) gesammelt und als Schmiermittelbad für die Mitnahmeverbindung (9) verwendet wird.

2. Vorrichtung nach Anspruch 1,
**dadurch gekennzeichnet,**
daß der Mitnehmer (10) aus einem scheibenförmigen Grundkörper (16) und einem sich nach außen erstreckenden Finger (17) besteht, wobei der Übergang vom Grundkörper (16) zum Finger (17) derart ausgebildet ist, daß sich eine Mulde (18) ausbildet, in der der Bolzen (12) bei einer Drehung der Welle (2) zur Anlage kommt.

3. Vorrichtung nach Anspruch 1,
**dadurch gekennzeichnet,**
daß der Vorratsraum (15) einen Überlauf (20) aufweist, durch den überschüssiges Schmiermittel aus dem Vorratsraum (15) in den ursprünglichen Schmiermittelkreislauf zurückgeführt wird.

4. Vorrichtung nach Anspruch 1,
**dadurch gekennzeichnet,**
daß das Ende der Welle (2) im Kurbelgehäuse (1) der Brennkraftmaschine gleitgelagert ist, wobei im Kurbelgehäuse (1) eine Schmiermittelbohrung (6) zur Zufuhr von Schmiermittel zur Lagerstelle (5) vorgesehen ist, und daß im Bereich der Mitnahmeverbindung (9) im Kurbelgehäuse (1) und/oder im Gehäuse (14) des Nebenaggregats (7) den Vorratsraum (15) bildende Ausnehmungen vorgesehen sind.

5. Vorrichtung nach Anspruch 1,
**dadurch gekennzeichnet,**
daß das Ende der Welle (2) im Kurbelgehäuse (1) der Brennkraftmaschine gleitgelagert ist, daß im Bereich der Mitnahmeverbindung (9) im Kurbelgehäuse (1) und/oder im Gehäuse (14) des Nebenaggregats (7) einen Vorratsraum (15) bildende Ausnehmungen vorgesehen sind und daß in der Stirnseite (11) der Nockenwelle (2) eine Durchgangsbohrung (23) zwischen dem Vorratsraum (15) und dem Kurbelraum (24) der Brennkraftmaschine vorgesehen ist.

6. Vorrichtung nach Anspruch 5,
**dadurch gekennzeichnet,**
daß die Durchgangsbohrung (23) gegenüber dem Bolzen (12) in Bezug auf die Nockenwellenachse um 180° versetzt angeordnet ist.

## Claims

1. Drive for an accessory unit of an internal-combustion engine, whereby a drive shaft of the accessory unit is disposed co-axially in relation to a shaft driven by the internal-combustion engine, whereby the drive shaft is driven by a cam connection disposed between the shaft and the drive shaft, whereby the cam connection is formed in conjunction with a pin which engages in a rotationally fixed cam on the drive shaft,
characterized in that
the shaft (2) is supported in a sleeve bearing (5), that the bearing (5) has lubricant supplied to it, and in that the waste lubricant from the bearing (5) is collected in a storage space (15) and used as a lubricant bath for the cam connection (9).

2. Device in accordance with claim 1,
characterized in that
the cam (10) comprises a disc-shaped base (16) and an arm element (17) extending outwards, whereby the transition from the basic body (16) to the arm element (17) is formed such that a hollow (18) is formed, in which the pin (12) comes to lie with rotation of the shaft (2).

3. Device in accordance with claim 1,
characterized in that
the storage space (15) has an overflow (20) through which excess lubricant is fed from the storage space (15) into the original circulation of lubricant.

4. Device in accordance with claim 1,
characterized in that
the end of the shaft (2) is bom in a sliding bearing in the crankcase (1) of the internal-combustion engine, whereby a lubricant boring (6), for the supply of lubricant to the bearing (5), is provided in the crankcase (1), and in that recesses forming the storage space (15), are provided in the area of the cam connection (9) in the crankcase (1) and/or in the housing (14) of the accessory unit (7).

5. Device in accordance with claim 1,
characterized in that
the end of the shaft (2) is born in a sliding bearing in the crankcase (1) of the internal-combustion engine, whereby a lubricant boring (6), for the supply of lubricant to the bearing (5), is provided in the crankcase (1), in that recesses forming the storage space (15), are provided in the area of the cam connection (9) in the crankcase (1) and/or in the housing (14) of the accessory unit (7), and in that a through hole (23) is provided in the end face (11) of the cam-shaft, between the storage space (15) and the crank area (24) of the internal-combustion engine.

6. Device in accordance with claim 5,
characterized in that
the through hole (23), in relation to the pin (12), is disposed displaced through an angle of 180° in relation to the axis of the cam shaft.

## Revendications

1. Dispositif d'entraînement pour un groupe auxiliaire d'un moteur à combustion interne, un arbre d'entraînement du groupe auxiliaire étant disposé coaxialement à un arbre entraîné par le moteur à combustion interne, l'arbre d'entraînement étant entraîné au moyen d'une liaison d'entraînement disposée entre l'arbre et l'arbre d'entraînement, la liaison d'entraînement étant réalisée au moyen d'un boulon, disposé en face frontale de l'arbre, à l'écart de l'axe de rotation, boulon s'engageant dans un organe d'entraînement disposé, de façon assujettie en rotation, sur l'arbre d'entraînement,
caractérisé en ce que
l'arbre (2) est monté dans un palier à glissement (5), en ce qu'au point de tourillonnement (5) est amené un lubrifiant, et en ce que la fuite du lubrifiant sortant du point de tourillonnement (5) est collectée dans une enceinte de stockage (15) et utilisée, à titre de bain de lubrifiant, pour la liaison d'entraînement (9).

2. Dispositif selon la revendication 1, caractérisé en ce que l'organe d'entraînement (10) est constitué d'un corps de base (16) discoïde et d'un doigt (17) s'étendant vers l'extérieur, la transition entre le corps de base (16) et le doigt (17) étant telle qu'elle constitue une auge (18), dans laquelle le boulon (12) vient en appui lorsque l'arbre 2 est en rotation.

3. Dispositif selon la revendication 1, caractérisé en ce que l'enceinte de stockage (15) présente un déversoir de trop-plein (20), au. moyen l'excès de lubrifiant sortant de l'enceinte de stockage (15) est retourné au circuit de lubrifiant initial.

4. Dispositif selon la revendication 1, caractérisé en ce que l'extrémité de l'arbre (2) est montée en tourillonnement à glissement dans le carter de vilebrequin (1) du moteur à combustion interne, dans le carter de vilebrequin (1) étant prévu un perçage pour lubrifiant (6), pour amener du lubrifiant au point de tourillonnement (5), et en ce que, dans la zone d'entraînement (9), dans le carter de vilebrequin (1) et/ou dans, le carter de vilebrequin (14) du groupe annexe (7), sont prévus des évidements constituant l'enceinte de stockage (15).

5. Dispositif selon la revendication 1, caractérisé en ce que l'extrêmité de l'arbre (2) est montée à tourillonnement à glissement dans le carter de vilebrequin (1) du moteur à combustion interne, en ce que, dans la zone de liaison d'entraînement (9) dans le carter de vilebrequin (1) et/ou dans le carter (14) du groupe annexe (7) sont prévus des évidements constituant une enceinte de stockage (15), et en ce que, en face frontale de l'arbre à cames (2) est prévu un perçage de passage (23), entre l'enceinte de stockage (15) et l'enceinte de vilebrequin (24) du moteur à combustion interne.

6. Dispositif selon la revendication 5, caractérisé en ce que le perçage de passage (23) est décalé de 180 degrés par rapport au boulon (12), par rapport à l'axe de l'arbre à cames.
